# DEMANDE DE BREVET EUROPEEN

(11) **EP 1 387 329 A1**
(43) Date de publication de la demande: **04.02.2004**
(21) Numéro de dépôt: 03291887.2
(22) Date de dépôt: 29.07.2003
(51) Int. Cl.: G07F 19/00

(54) **Procédé de télépaiement, système et passerelle pour la mise en oeuvre de ce procédé, utilisation de ce procédé**

(30) Priorité: 30.07.2002 FR 0209698
(71) Demandeur: FRANCE TELECOM, 75015 Paris (FR)
(72) Inventeur: Trinquet, Dominique, 14000 Caen (FR); Michon, Philippe, 14760 Bretteville sur Odon (FR)
(74) Mandataire: Remy, Vincent Noel Paul

(57) **Abrégé**

Ce procédé de télépaiement entre un utilisateur muni d'un premier terminal de télécommunications (18, 20) et un commerçant muni d'un deuxième terminal de télécommunications (22), via des moyens de paiement dits « passerelle » (34), comporte une étape de transmission (54, 56, 58, 60, 62, 64) d'un paiement du terminal du client vers le terminal du commerçant, via la passerelle.

La passerelle (34) comporte un premier serveur de paiement opérateur (32) pour l'échange de données avec le terminal du client et un second serveur de paiement bancaire (28) interfacé avec le premier pour l'échange de données avec le terminal du commerçant (22), et le procédé comporte une étape (60, 62) de paiement proprement dite comprenant des instructions (60) de débit d'un compte, exécutée à partir du second serveur de paiement (28).

## Description

La présente invention concerne un procédé de télépaiement et un système de télépaiement ainsi qu'une passerelle pour la mise en oeuvre de ce procédé. Elle concerne également l'utilisation d'un tel procédé.

Plus précisément, l'invention concerne un procédé de télépaiement entre un utilisateur muni d'un premier terminal de télécommunications et un commerçant muni d'un deuxième terminal de télécommunications, via des moyens de paiement dits « passerelle », comportant une étape de transmission d'un paiement du terminal du client vers le terminal du commerçant, via la passerelle.

Un tel procédé de télépaiement est connu et est par exemple décrit dans la demande de brevet français publiée sous le n° 2 790 162.

Dans ce document, le procédé comporte des étapes d'échange d'informations entre le client et le commerçant, via la passerelle, cette dernière étant la propriété d'un opérateur de télécommunications. La passerelle assure l'authentification du client et du commerçant, en vue d'améliorer la sécurité des échanges et prend en charge également les échanges de données confidentielles avec les bases de données bancaires, pour l'exécution de l'étape de paiement proprement dite.

Cependant ce procédé pose problème lorsque l'on souhaite l'étendre à un système comportant plusieurs opérateurs de télécommunications, donc plusieurs passerelles. En effet, dans ce cas, les bases de données bancaires doivent pouvoir échanger leurs données confidentielles avec toutes ces passerelles. De plus, certains groupements bancaires imposent maintenant que les bases de données bancaires ne soient pas communiquées à un opérateur de télécommunications.

L'invention vise à remédier aux inconvénients d'un procédé de télépaiement classique, en fournissant un procédé permettant d'éviter l'échange de données confidentielles entre les bases de données d'établissements bancaires et des passerelles d'opérateurs de télécommunications, tout assurant des transactions sécurisées.

L'invention a donc pour objet un procédé de télépaiement du type précité, caractérisé en ce que, la passerelle comportant deux serveurs de paiement reliés entre eux, un premier serveur de paiement opérateur adapté pour l'échange de données avec le terminal du client et un second serveur de paiement bancaire adapté pour l'échange de données avec le terminal du commerçant, le procédé comporte une étape de paiement proprement dite comprenant des instructions de débit d'un compte, exécutée à partir du second serveur de paiement.

Ainsi, le premier serveur de paiement opérateur étant propre à l'opérateur et le second serveur de paiement bancaire étant le seul à être relié aux bases de données bancaires, celui-ci peut être rendu indépendant des échanges établis sous la responsabilité de l'opérateur.

Un procédé de télépaiement selon l'invention peut en outre comporter l'une ou plusieurs des caractéristiques suivantes :
- il comporte une étape de transmission d'une demande de paiement du terminal du commerçant vers le terminal du client, via la passerelle avant l'étape de transmission du paiement ;
- il comporte une étape de transmission d'un message d'accord de paiement émis à partir du terminal du client à destination d'un serveur de gestion d'autorisations de transactions, ce dernier étant relié au serveur de paiement bancaire de la passerelle ;
- le message d'accord de paiement est signé à l'aide d'une clé symétrique secrète selon un procédé de cryptage symétrique, cette clé étant connue uniquement du terminal du client et du serveur de paiement bancaire ;
- le message d'accord de paiement comporte un identifiant du terminal du client, et le serveur de paiement bancaire comporte des moyens d'association de cet identifiant à un code de compte bancaire ;
- le procédé comporte une étape de transmission par le serveur de paiement bancaire vers le serveur de gestion d'autorisations de transactions d'une demande d'autorisation de paiement, le serveur de gestion d'autorisations de transactions étant adapté pour effectuer le débit d'un compte bancaire du client à l'aide du code de compte bancaire ;
- le procédé comporte en outre une étape de transmission d'un message de confirmation d'autorisation du paiement au terminal du commerçant ; et
- le procédé comporte en outre une étape de transmission d'un message de confirmation d'autorisation du paiement au terminal du client.

L'invention concerne également un système de télépaiement entre un utilisateur muni d'un premier terminal de télécommunications et un commerçant muni d'un deuxième terminal de télécommunications, via des moyens de paiement dits « passerelle », pour la mise en oeuvre d'un procédé comportant une étape de transmission d'un paiement du terminal du client vers le terminal du commerçant, via la passerelle, caractérisé en ce que la passerelle comporte deux serveurs de paiement reliés entre eux, un premier serveur de paiement opérateur adapté pour l'échange de données avec le terminal du client et un second serveur de paiement bancaire adapté pour l'échange de données avec le terminal du commerçant.

Un système de télépaiement selon l'invention peut en outre comporter l'une ou plusieurs des caractéristiques suivantes :
- le second serveur comporte des moyens de paiement proprement dits, adaptés pour l'émission d'instructions de débit d'un compte ;
- le système comporte un serveur de gestion d'autorisations de transactions relié au serveur de paiement bancaire de la passerelle, adapté pour l'exécution de l'étape de paiement proprement dite ; et
- le terminal du client comporte un téléphone mobile.

L'invention concerne également une passerelle de télépaiement pour la mise en oeuvre d'un procédé comportant une étape de transmission d'un paiement d'un premier terminal d'un client vers un second terminal d'un commerçant, via la passerelle, caractérisée en ce qu'elle comporte deux serveurs de paiement reliés entre eux, un premier serveur de paiement opérateur adapté pour l'échange de données avec le terminal du client et un second serveur de paiement bancaire adapté pour l'échange de données avec le terminal du commerçant.

Une passerelle de télépaiement selon l'invention peut en outre comporter la caractéristique selon laquelle le second serveur comporte des moyens de paiement proprement dits, adaptés pour l'émission d'instructions de débit d'un compte.

Enfin, l'invention concerne également l'utilisation d'un procédé de télépaiement tel que décrit précédemment pour le rechargement d'un compte prépayé.

L'invention sera mieux comprise à l'aide de la description qui va suivre, donnée uniquement à titre d'exemple et faite en se référant au dessin annexé sur lequel la figure unique illustre la structure générale d'un système selon l'invention et les échanges établis entre les différents éléments du système lors de l'exécution d'un télépaiement.

Le système de télépaiement représenté sur cette figure comporte un site client 10, un site commerçant 12, un site bancaire 14 et un site opérateur 16.

Dans cet exemple, le site client 10 comporte deux terminaux de télécommunications, comprenant un ordinateur personnel 18 de type classique connecté à un réseau de transmission d'informations tel qu'lnternet, et un téléphone mobile 20. Le téléphone mobile 20 est de préférence un téléphone dit de deuxième génération « phase 2+ », ces téléphones comportant une carte d'identification d'abonné dite carte SIM pouvant stocker des programmes appelés « TOOLKIT » qui permettent, en plus des traitements internes que peut faire tout programme, d'agir sur l'affichage du mobile, de saisir les touches du clavier actionnées par l'utilisateur, de recevoir ou émettre des messages courts.

Le site commerçant 12 comporte un terminal de télécommunications 22 constitué d'un serveur marchand 24 et d'une interface de paiement 26 reliée au serveur marchand 24. Le serveur marchand 24 est par exemple connecté au réseau Internet et/ou au réseau téléphonique, de sorte qu'il peut entrer en communication indifféremment avec l'ordinateur personnel 18 et/ou le téléphone mobile 20. L'interface de paiement 26 est par exemple reliée au réseau Internet pour lui permettre d'entrer en communication avec le site bancaire 14, au moyens de l'établissement d'une liaison sécurisée.

Le site bancaire 14 comporte un serveur de paiement bancaire 28 associé à un serveur 30 de gestion d'autorisations de transactions.

Le site opérateur 16 comporte un serveur de paiement opérateur 32. Ce serveur 32 est interfacé avec le serveur de paiement bancaire 28 et forme avec celui-ci des moyens de paiement 34 appelés « passerelle ». La passerelle est donc scindée en deux parties distinctes, l'une étant situé du côté du site bancaire 14, l'autre étant située du côté du site opérateur 16.

Dans cet exemple, on n'a représenté qu'un site opérateur 16, mais d'une façon générale, il est possible d'associer plusieurs sites opérateurs au site bancaire 14, en associant plusieurs serveurs de paiement opérateurs au serveur de paiement bancaire 28. De la sorte on crée autant de passerelles que de serveurs de paiement opérateurs, chacune étant constituée de l'association d'un serveur de paiement opérateur avec le serveur de paiement bancaire 28.

Pour pouvoir communiquer avec le téléphone mobile 20, le serveur de paiement opérateur 32 est associé à une plate-forme de téléchargement de données 36 et à un gestionnaire 38 de transmission de messages courts. La plate-forme 36 et le gestionnaire 38 font également partie du site opérateur 16.

Le procédé de télépaiement mis en oeuvre par le système décrit précédemment comporte une première étape 40 lors de laquelle un client transmet une demande d'achat au serveur marchand 24 à partir de son téléphone mobile 20 ou de l'ordinateur personnel 18. Cette demande d'achat comporte un numéro d'identification du téléphone mobile 20.

Lors de l'étape 42 suivante, le serveur marchand 24 transmet cette demande à l'interface de paiement 26.

Si le client a transmis sa demande à partir du téléphone mobile 20 par exemple, l'interface de paiement 26 extrait du numéro d'identification un identifiant unique du téléphone mobile, connu de façon classique sous le nom de MSISDN et transmet ce MSISDN lors d'une étape 44 au serveur de paiement bancaire 28. Le serveur de paiement bancaire 28 comporte en mémoire un identifiant de l'opérateur associé à l'identifiant MSISDN du téléphone mobile 20. L'identification de l'opérateur lui permet de savoir quel site opérateur 16 est habilité à échanger des informations avec le téléphone mobile 20 et donc le serveur de paiement opérateur 32 correspondant.

Ainsi, lors de l'étape 46 suivante, le serveur de paiement bancaire 28 transmet au serveur de paiement opérateur 32 un message de demande de paiement. Ce message n'est pas a priori dans un format compatible avec le format accepté par le téléphone mobile 20. Le serveur de paiement opérateur 32 transforme donc le message de sorte qu'il soit dans un format compatible avec celui du téléphone mobile 20 et transmet ce message formaté à la plate-forme 36 de téléchargement de données, lors d'une étape 48.

Celle-ci, lors d'une étape 50, transmet le message formaté au gestionnaire 38 de transmission de messages courts.

Lors de l'étape 52 suivante, le gestionnaire 38 transmet un message court au téléphone mobile 20 comportant le message formaté.

A la réception de ce message, le client entre sur le clavier de son téléphone mobile 20 un code de paiement confidentiel, appelé code PIN de paiement. Si celui-ci est correct, une signature est alors générée à partir d'une clé symétrique et des données du message formaté reçu, puis elle est transmise lors d'une étape 54 au gestionnaire 38 de transmission de messages courts en tant que message d'accord de paiement. La clé symétrique est une clé confidentielle stockée d'une part sur la carte SIM du téléphone mobile 20 du client et d'autre part par le serveur de paiement bancaire 28.

Lors de l'étape 56 suivante, le gestionnaire 38 transmet ce message d'accord de paiement au serveur de paiement opérateur 32.

Le serveur de paiement opérateur 32 transforme le format de ce message d'accord de paiement en un format compatible avec celui accepté par le serveur de paiement bancaire 28 et communique, lors de l'étape 58 suivante, ce message d'accord de paiement au serveur de paiement bancaire 28.

Le serveur de paiement bancaire 28 vérifie la signature à l'aide de la clé symétrique et retrouve le numéro de carte bancaire du client grâce au code MSISDN transmis avec le message d'accord de paiement. En effet, ce serveur stocke en mémoire un tableau de correspondance entre des codes MSISDN et des numéros de cartes bancaires.

Lors de l'étape 60 suivante, le serveur de paiement bancaire 28 transmet une demande d'autorisation de paiement au serveur 30 de gestion d'autorisations de transactions. Cette transmission vaut instruction de débit du compte bancaire, sous réserve de l'accord du serveur 30.

Si le serveur de gestion 30 autorise effectivement le débit du compte bancaire du client, lors des étapes 62, 64 et 66 suivantes, un message de confirmation d'autorisation du paiement est communiqué successivement au serveur de paiement bancaire 28, à l'interface de paiement 26 et au serveur marchand 24. Enfin, il peut éventuellement également être transmis au client par le serveur marchand, par exemple sur son ordinateur personnel 18, lors d'une étape finale 68.

De même, le message de confirmation d'autorisation est transmis au téléphone mobile 20 du client, lors d'étapes 70, 72, 74 et 76, en passant successivement par le serveur de paiement bancaire 28, le serveur de paiement opérateur 32, la plate-forme 36 de téléchargement de données, et le gestionnaire 38 de transmission de messages courts.

Si par contre, le serveur de gestion 30 n'autorise pas le débit du compte bancaire du client, un message d'interdiction du paiement est communiqué au site marchand 24 et au téléphone mobile 20 du client, en reproduisant les étapes 62 à 76 précédemment décrites.

Ce procédé de télépaiement permet également le rechargement d'un compte téléphonique prépayé, c'est-à-dire une opération par laquelle le client ajoute un crédit à ce compte prépayé. Les opérations de rechargement s'effectuent en exécutant le procédé de paiement de l'étape 54 à l'étape 76, en omettant l'étape 68.

En effet, dans ce cas particulier, le site marchand est le site de l'opérateur de télécommunication gérant le compte téléphonique du client. On reproduit alors les étapes 54 à 60 pour recharger le compte téléphonique du client, puis on reproduit les étapes 62 à 66 pour informer le serveur marchand 24 de l'opérateur de télécommunication du rechargement du compte prépayé. Enfin, on reproduit les étapes 70 à 76 pour informer le client que l'opération de rechargement a été effectuée.

Il apparaît clairement qu'un procédé de télépaiement selon l'invention et un système pour la mise en oeuvre de ce procédé permettent à un établissement bancaire de conserver la maîtrise des données confidentielles concernant le paiement, tout en rendant l'opérateur responsable des étapes classiques de transmission sécurisée d'informations et d'authentification.

Un autre avantage de l'invention consiste en la possibilité d'associer plusieurs opérateurs 16 à un même site bancaire 14 en reliant plusieurs serveurs de paiement opérateur tels que le serveur 32 à un unique serveur de paiement bancaire 28.

Enfin, un autre avantage de l'invention consiste en la possibilité d'associer plusieurs sites bancaires 14 à un même opérateur 16 en reliant plusieurs serveurs de paiement bancaire tel que le serveur 28 à un unique serveur de paiement opérateur 32.

## Revendications

1. Procédé de télépaiement entre un utilisateur muni d'un premier terminal de télécommunications (18, 20) et un commerçant muni d'un deuxième terminal de télécommunications (22), via des moyens de paiement dits « passerelle » (34), comportant une étape de transmission (54, 56, 58, 60, 62, 64) d'un paiement du terminal du client vers le terminal du commerçant, via la passerelle, **caractérisé en ce que**, la passerelle (34) comportant deux serveurs de paiement reliés entre eux, un premier serveur de paiement opérateur (32) adapté pour l'échange de données avec le terminal du client (18, 20) et un second serveur de paiement bancaire (28) adapté pour l'échange de données avec le terminal du commerçant (22), le procédé comporte une étape (60, 62) de paiement proprement dite comprenant des instructions (60) de débit d'un compte, exécutée à partir du second serveur de paiement (28).

2. Procédé de télépaiement selon la revendication 1, **caractérisé en ce qu'**il comporte une étape de transmission (44, 46, 48, 50, 52) d'une demande de paiement du terminal du commerçant vers le terminal du client, via la passerelle, avant l'étape de transmission (54, 56, 58, 60, 62, 64) du paiement.

3. Procédé de télépaiement selon la revendication 1 ou 2, **caractérisé en ce qu'**il comporte une étape (54, 56, 58, 60) de transmission d'un message d'accord de paiement émis à partir du terminal (18, 20) du client à destination d'un serveur (30) de gestion d'autorisations de transactions, ce dernier étant relié au serveur de paiement bancaire (28) de la passerelle.

4. Procédé de télépaiement selon la revendication 3, **caractérisé en ce que** le message d'accord de paiement est signé à l'aide d'une clé symétrique secrète selon un procédé de cryptage symétrique, cette clé étant connue uniquement du terminal du client (18, 20) et du serveur de paiement bancaire (28).

5. Procédé de télépaiement selon la revendication 3 ou 4, **caractérisé en ce que** le message d'accord de paiement comporte un identifiant du terminal du client (18, 20), et **en ce que** le serveur de paiement bancaire (28) comporte des moyens d'association de cet identifiant à un code de compte bancaire.

6. Procédé de télépaiement selon la revendication 5, **caractérisé en ce qu'**il comporte une étape de transmission par le serveur de paiement bancaire (28) vers le serveur (30) de gestion d'autorisations de transactions d'une demande d'autorisation de paiement, le serveur (30) de gestion d'autorisations de transactions étant adapté pour effectuer le débit d'un compte bancaire du client à l'aide du code de compte bancaire.

7. Procédé de télépaiement selon l'une quelconque des revendications 1 à 6, **caractérisé en ce qu'**il comporte en outre une étape (62, 64, 66) de transmission d'un message de confirmation d'autorisation du paiement au terminal du commerçant (22).

8. Procédé de télépaiement selon l'une quelconque des revendications 1 à 7, **caractérisé en ce qu'**il comporte en outre une étape (62, 70, 72, 74, 76) de transmission d'un message de confirmation d'autorisation du paiement au terminal du client (20).

9. Système de télépaiement entre un utilisateur muni d'un premier terminal de télécommunications (18, 20) et un commerçant muni d'un deuxième terminal de télécommunications (22), via des moyens de paiement dits « passerelle » (34), pour la mise en oeuvre d'un procédé comportant une étape de transmission (54, 56, 58, 60, 62, 64) d'un paiement du terminal du client vers le terminal du commerçant, via la passerelle, **caractérisé en ce que** la passerelle (34) comporte deux serveurs de paiement reliés entre eux, un premier serveur de paiement opérateur (32) adapté pour l'échange de données avec le terminal du client (18, 20) et un second serveur de paiement bancaire (28) adapté pour l'échange de données avec le terminal du commerçant (22).

10. Système de télépaiement selon la revendication 9, **caractérisé en ce que** le second serveur (28) comporte des moyens de paiement proprement dits, adaptés pour l'émission d'instructions (60) de débit d'un compte.

11. Système de télépaiement selon la revendication 9 ou 10, **caractérisé en ce qu'**il comporte un serveur (30) de gestion d'autorisations de transactions relié au second serveur de paiement bancaire (28), adapté pour l'exécution de l'étape de paiement proprement dite.

12. Système de télépaiement selon l'une quelconque des revendications 9 à 11, **caractérisé en ce que** le terminal du client comporte un téléphone mobile (20).

13. Passerelle de télépaiement (34) pour la mise en oeuvre d'un procédé comportant une étape de transmission (54, 56, 58, 60, 62, 64) d'un paiement d'un premier terminal d'un client vers un second terminal d'un commerçant, via la passerelle, **caractérisée en ce qu'**elle comporte deux serveurs de paiement reliés entre eux, un premier serveur de paiement opérateur (32) adapté pour l'échange de données avec le terminal du client (18, 20) et un second serveur de paiement bancaire (28) adapté pour l'échange de données avec le terminal du commerçant (22).

14. Passerelle de télépaiement (34) selon la revendication 13, **caractérisée en ce que** le second serveur (28) comporte des moyens de paiement proprement dits, adaptés pour l'émission d'instructions (60) de débit d'un compte.

15. Utilisation d'un procédé de télépaiement selon la revendication 1 pour le rechargement d'un compte prépayé.
